# EUROPEAN PATENT SPECIFICATION

(11) **EP 2 557 627 B1**
(45) Date of publication and mention of the grant of the patent: **06.04.2016**
(21) Application number: 10849508.6
(22) Date of filing: 07.04.2010
(51) Int. Cl.: H01M 2/10, H01M 10/04, H01M 10/647, H01M 10/6551, H01M 10/6555, H01M 10/613, B60L 11/18

(54) **SECONDARY BATTERY MODULE**
SEKUNDÄRBATTERIEMODUL
MODULE DE BATTERIE RECHARGEABLE

(43) Date of publication of application: 13.02.2013
(73) Proprietor: Eig Ltd., Cheonan-city, Chungcheongnam-do 330-814 (KR)
(72) Inventor: HONG, Young Jin, Asan-si, Chungcheongnam-do 336-719 (KR); KIM, Kyung Il, Cheonan-si, Chungcheongnam-do 331-964 (KR); LEE, Dae Pyo, Seoul 158-095 (KR)
(74) Representative: von Kreisler Selting Werner - Partnerschaft von Patentanwälten und Rechtsanwälten mbB
(86) International application number: PCT/KR2010/002124
(87) International publication number: WO 2011/126161

(56) References cited:
- WO-A2-2008/106946
- JP-A- 2006 172 870
- JP-A- 2008 091 205
- KR-A- 20060 102 851
- KR-A- 20060 102 855

## Description

### Field of the Invention

The present invention relates to a high output and large capacity secondary battery module that can be charged and discharged by a plurality of unit cells electrically connected one another, and more particularly, to a secondary battery module that prevents volume expansion, damage, and the formation of cracks in the unit cells, and the cooling efficiency of the unit cells of which is improved by means of integrally including a heat-dissipating member on each of the unit cells that are stacked in series.

### Background of the Invention

Recently, a chargeable or dischargeable secondary battery is being broadly used as an energy source for wireless mobile devices. Further, the secondary battery is being received the spotlight as an energy source for electric cars, hybrid electric cars and the like, which are being suggested as solutions to solve problems such as air pollution caused by existing gasoline vehicles, diesel vehicles and the like using fossil fuels. Accordingly, kinds of application using the secondary battery become highly diverse due to advantages of the secondary battery, and it is expected that the secondary battery will be applied to more fields and more products in the future than now.

Thus, as the applicable fields and products of the secondary battery become more diverse, kinds of the battery also become more diverse so as to provide proper output and capacity. In addition, the batteries applied to the concerned fields and products are strongly needed to be smaller and lighter. For example, depending on the trend of miniaturizing and slimming small mobile devices such as mobile phones, PDAs, digital cameras, laptops and the like, the products uses one, or three or four small and light weight battery cells per one device.

On the other hand, a battery module formed by electrically connecting a plurality of battery cells(or also called "battery pack") is being used for mid to large devices such as electric bicycles, electric cars, hybrid cars and the like due to the need for high output and large capacity. Because the size and the weight of the battery module are directly linked to a receiving space and power and the like of the concerned mid to large device and the like, the manufacturers are trying to manufacture the battery module as small and light as possible.

Meanwhile, in each of the unit cells, a large amount of gas and heat is generated at the same time during charging and discharging procedures. At this time, the generated gas expands the volume of the unit cell and causes the case thereof to swell, and the generated heat deteriorates the electrochemical performance and therefore the battery module should be quickly cooled. But the existing battery module not having a separate means for solving the above problems had a problem of reducing the heat-dissipating ability.

WO 2008/106946 A2 discloses a power storage cell with a flexible envelope, fixed to a surface of a heat conductng plate.

JP 2008091205 A relates to a battery module comprising thin-type batteries, in which a power generation element laminating electrode plates of a positive electrode and a negative electrode is sealed inside a battery outer package material formed of a sheet-like member.

KR 20060102851 A describes a rechargable battery module including a plurality of unit cells arranged at particular intervals and a heat sink plate mounted between the plurality of unit cells and adapted to dissipate heat generated by the plurality of unit cells.

### Summary of the Invention

In order to solve the above-mentioned problems, the present invention is objected to provide a secondary battery module, which is small and light weight due to each of unit cells thereof having a heat-dissipating plate integrated with the unit cell as well as has improved cooling efficiency due to quick external release of the heat generated from the unit cells.

In order to accomplish one object of the present invention, the present invention provides a high output and large capacity secondary battery module, which can be charged or discharged by a plurality of unit cells electrically connected one another, wherein the unit cells comprise:
a chargeable or dischargeable battery cell;
a cell case receiving the battery cell;
a heat-dissipating member covering the side which is opposite to the side facing the cell case; and
a terminal unit insulating cover covering the terminal unit of the battery cell, wherein one side of the terminal unit insulating cover is slidingly inserted into the heat-dissipating member.

In the battery module of the present invention, electrodes are extruded outside of the battery cell and bent tap terminals are welded to the extruded electrodes.

In the battery module of the present invention, the cell case comprises:
a groove unit in which the battery cell is settled horizontally;
tap terminal inserting units to which the bending unit of the tap terminal attached to the battery cell is combined by insertion;
heat-dissipating member inserting units to which the upper bending units and the lower bending units of the heat-dissipating member are combined by insertion; and
penetration units where a fixing bolt, which connects the plurality of unit cells stacked vertically, passes through.

In the battery module according to the present invention, the heat-dissipating member comprises:
a heat-dissipating plate;
right and left bending units, which are extended from the heat-dissipating plate and are bent to surround the right and left sides of the battery cell;
upper bending units extended from the heat-dissipating plate and surrounding the upper part of the battery cell; and
lower bending units extended from the heat-dissipating plate and surrounding the lower part of the battery cell, and
the heat-dissipating member is combined with the cell case across the battery cell by inserting the right and left bending units to the outside of the cell case and inserting the upper bending units and the lower bending units into the heat-dissipating member inserting units formed on the cell case.

In the battery module according to the present invention, the right and left bending units of the heat-dissipating member further comprise flap units, and the flap unit is a form of a plurality of plates horizontally extended from the right and left bending units or a form of a plurality of plates vertically extended from the right and left bending units.

In another embodiment of the present invention, the unit cell of the secondary battery module according to the present invention further comprise a heat-dissipating auxiliary member covering the outer face of the cell case.

According to the present invention, the heat-dissipating auxiliary member comprises:
a heat-dissipating auxiliary member plate;
right and left bending units, which are extended from the heat-dissipating auxiliary member plate and are bent to surround the right and left sides of the cell case;
upper bending units extended from the heat-dissipating auxiliary member plate and surrounding the upper part of the cell case; and
lower bending units extended from the heat-dissipating auxiliary member plate and surrounding the lower part of the cell case, and
the heat-dissipating auxiliary member is integrally combined with the cell case by inserting the right and left bending units to the outside of the cell case and inserting the upper bending units and the lower bending units into the heat-dissipating member inserting units formed on the cell case.

In the secondary battery module according to the present invention, the heat-dissipating member is characterized by being made of a metal material, a carbon material or a ceramic material, and preferably, an aluminum material.

In the secondary battery module according to the present invention, the heat-dissipating auxiliary member is characterized by being made of a metal material, a carbon material or a ceramic material, and preferably, an aluminum material.

In the secondary battery module according to the present invention, an adhesive tape is attached to the part where the terminal unit insulating cover is slidingly inserted into the heat-dissipating member.

The secondary battery module according to the present invention comprises:
a circuit case equipped with a substrate measuring and managing voltage, current and temperature of the battery cell received in the cell case; and
a sensing cable connecting the tap terminal of the battery cell and the substrate of the circuit case and sensing the voltage and the temperature of the battery cell.

### Advantageous Effects of the Invention

According to the present invention, the secondary battery module having the heat-dissipating plate integrated with each of the unit cells can prevent volume expansion and damage in each of the unit cells, and has the improved cooling efficiency by quickly emitting the heat generated from each of the battery cells.

The mid to large battery pack embedded in hybrid cars or electric cars has the risk of explosion by external impact or vibration, but the secondary battery module according to the present invention having the heat-dissipating plate integrated with each of the unit cells has the durability reinforcement effect and the vibration resistant effect so as to have the safety increase effect.

### Brief Description of Drawings

The above and other objects and features of the present invention will become apparent from the following description of the invention taken in conjunction with the following accompanying drawings, which respectively show:
FIG. 1: a perspective view of the battery cell making up the unit cell of the secondary battery module according to the present invention;
FIG. 2: a perspective view of the cell case making up the unit cell of the secondary battery module according to the present invention;
FIGs. 3 to 5: perspective views of the heat-dissipating member making up the unit cell of the secondary battery module according to the present invention;
FIG. 6: an exploded perspective view of the unit cell of the secondary battery module according to the present invention;
FIG. 7: a perspective view of the assembled unit cell of the secondary battery module according to the present invention;
FIG. 8: a perspective view of the heat-dissipating auxiliary member making up the unit cell of the secondary battery module according to the present invention;
FIG. 9: a perspective view showing the combination of the heat-dissipating auxiliary member and the cell case making up the unit cell of the secondary battery module according to the present invention; and
FIG. 10: a perspective view of the secondary battery module according to the present invention.

### Detailed Description of the Invention

Hereinafter, the present invention will be described in detail with reference to the accompanying drawings which are given hereinbelow by way of illustration only, and thus are not limitative of the present invention.

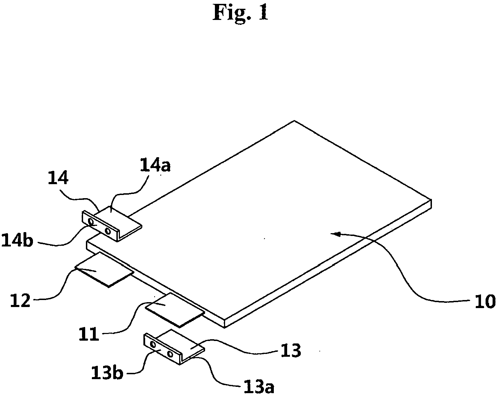

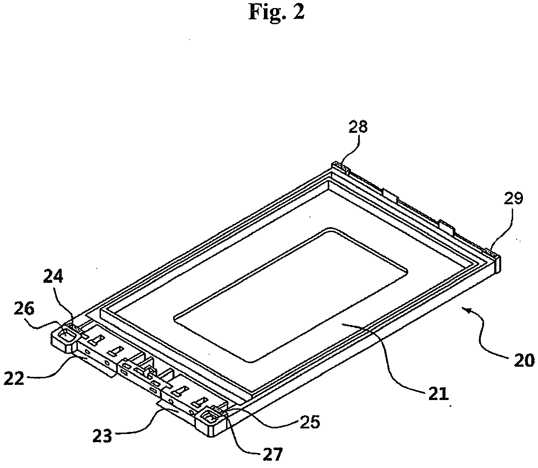

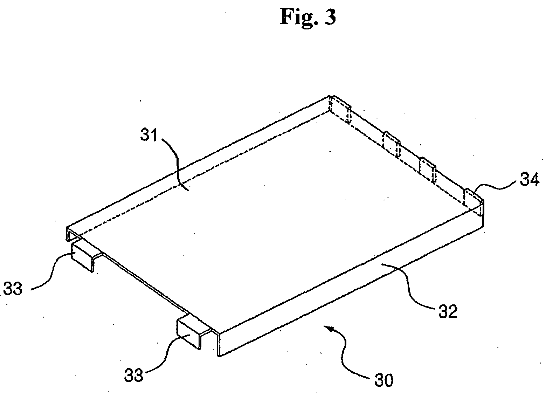

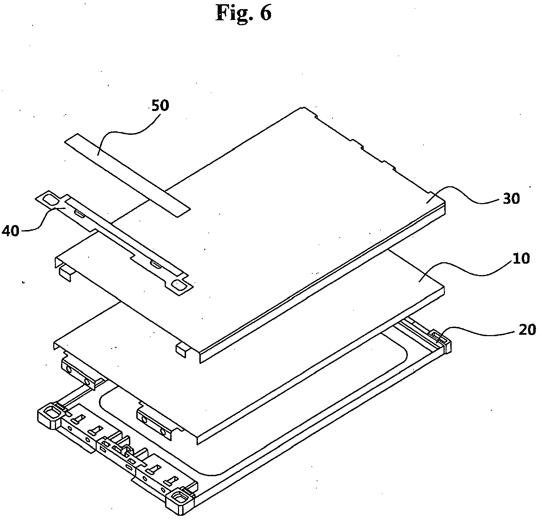

FIG. 1 is a perspective view of the battery cell making up the secondary battery module according to the present invention, FIG. 2 is a a perspective view of the cell case according to the present invention, FIGs. 3 to 5 are perspective views of the heat-dissipating member making up the secondary battery module according to the present invention, and FIG. 6 is an exploded perspective view of the unit cell of the secondary battery module according to the present invention.

As shown in these FIGs, the unit cell of the secondary battery module according to the present invention comprises: a battery cell(10), a cell case(20) receiving the battery cell, a heat-dissipating member(30) covering the side received in the cell case of the battery cell and the opposite side thereof, and a terminal unit insulating cover(40) covering the terminal unit of the battery cell.

As shown in FIG. 1, an anode and a cathode(11, 12) are protrudingly installed on the tip of the battery cell(10), and the anode and the cathode(11, 12) are made of metal such as copper or aluminum. Further, an anode tap terminal and a cathode tap terminal(13, 14) are attached to the electrodes(11, 12), and the tap terminals are bent at right angle and include horizontal units(13a, 14a) and vertical bending units(13b, 14b). As shown in FIG. 1, the tap terminals(13, 14) bent in the same direction are attached to the electrodes.

The cell case(20) receiving the battery cell is made by injection molding using nylon, and the nylon is used because the melting point of the nylon is higher than 200 °C. When charging or discharging the module structured according to the present invention with high electric current, heat is generated by resistance at the terminals connected in series and in parallel, and when the higher current is applied, the temperature of the heat generated at the terminals becomes higher. If a material having low melting point is used, there may be a problem that the cell case(20) may be deformed or melted down, and therefore, it is preferred to use a heat-resistant material.

As shown in FIG. 2, the cell case(20) receiving the battery cell comprises: a groove unit(21) in which the battery cell is settled horizontally, tap terminal inserting units(22, 23) to which the vertical bending units(13b, 14b) of the anode and cathode tap terminals attached to the electrodes of the battery cell are combined by insertion, heat-dissipating member inserting units(24, 25, 28, 29) combined by sliding of the protrusions for combination of the heat-dissipating member, and penetration units(26, 27) where a fixing bolt,

The groove(21) of the battery cell is formed concavely over the entire cell case(20), and the vertical bending units(13b, 14b) of the anode and the cathode tap terminals attached to the battery cell are inserted into the tap terminal inserting units(22, 23) of the cell case(20) using a screw.

Further, the tap terminals of the upper and lower battery cells(10), which are settled in each cell case and stacked vertically, are connected in series by serial connection terminals(not shown in FIGs). The serial connection terminals are combined with the tap terminals(13,14) using screws, and screw holes are formed on the tap terminals(13,14) in advance in order to join the serial connection terminals to the tap terminals(13,14) using the screws. Also, it is preferred to make the screw holes on the serial connection terminals in advance. Further, in order to prevent short between the upper and the lower serial connection terminals caused by exposure of the serial connection terminals, it is preferred to seal the serial connection terminal by covering the outside thereof with a terminal cover.

In the unit cell of the battery module of the present invention, the heat-dissipating member (30) covers the side which is opposite to the side facing the cell case.

As shown in FIG. 3, the heat-dissipating member(30) comprises: a heat-dissipating plate(31), right and left bending units(32) forming a closely attached structure with the battery cell(10) and surrounding the right and left sides of the battery cell(10) in order to integrally combined with the cell case(20), the upper bending unit(33) surrounding the upper part where the electrode terminals are protruded, and the lower bending unit(34) surrounding the lower part opposite thereof. And the cell case(20) comprising the heat-dissipating member inserting units(24, 25, 28, 29) at the positions corresponding the upper bending units and the lower bending units of the heat-dissipating member is combined with the heat-dissipating member across the battery cell(10).

Namely, the heat-dissipating member(30) comprises the right and left bending units(32), the upper bending units(33) and the lower bending units(34) to surround the upper, lower, right and left sides of the battery cell(10) settled in the cell case(20) besides the heat-dissipating plate(31), and the heat-dissipating member(30) is stacked in a state of entirely close adhesion with the battery cell. Therefore, the heat-dissipating member(30) efficiently absorbs the heat generated from the battery cell(10) to efficiently perform the heat-dissipating function and therefore to prevent the short of the battery cell(10) so as to more effectively secure safety.

The installing position and number of the right and left bending units, the upper bending units and the lower bending units of the heat-dissipating member are not limited, and the method for combining the bending units and the cell case is not limited, but it is preferred to have a mechanical combination structure in order to reduce manufacturing cost and simplify an assembly procedure.

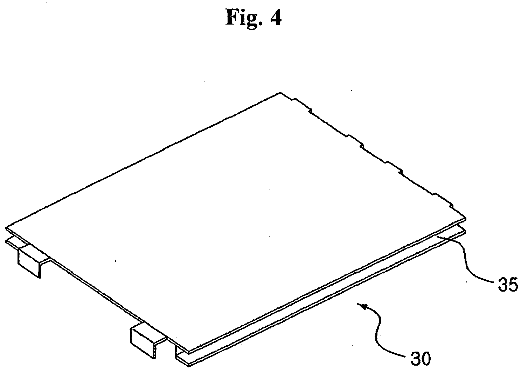

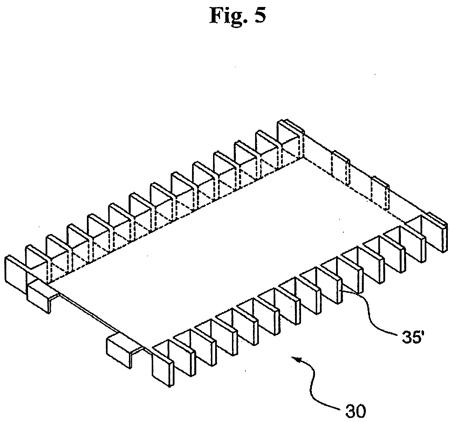

In constructing the secondary battery module, in case of the unit cells stacked in a mutual adhesion way or a contact way, the right and the left bending units of the heat-dissipating member may further comprise flap units in order to effectively emit the heat generated from the unit cell body to the outside. Examples of the heat-dissipating member of the present invention having the flap units are shown in FIGs. 4 and 5. As shown in FIGs. 4 and 5, the right and the left bending units(32) of the heat-dissipating member(30) comprises flap units(35, 35') extended outside of the cell, and in case of FIG. 4, the flap unit(35) is a form of a plurality of plates horizontally extended, and in case of FIG. 5, the flap unit(35') is a form of a plurality of plates vertically extended. In case of having the flap units, the area of the heat-dissipating member met with the outside of the cell becomes larger so as to more effectively emit the heat generated from the battery cell.

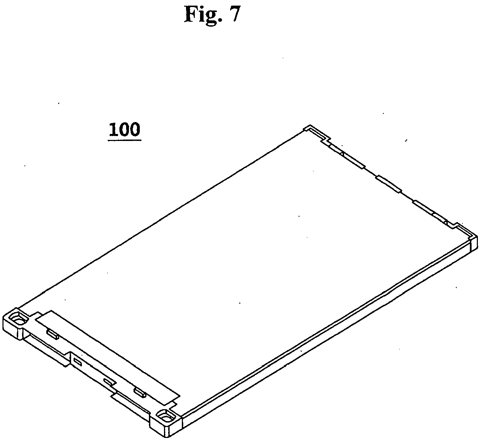

FIG. 6 is an exploded perspective view showing the battery cell(10) settled between the cell case(20) and the heat-dissipating member(30) according to the present invention, and FIG. 7 is a perspective view of the assembled unit cell(100) of the secondary battery module according to the present invention.

A terminal unit insulating cover(40) may be attached to the heat-dissipating member combined with the cell case at the part contacted with the terminal of the battery cell. The terminal unit insulating cover(40) is constructed to cover the anode and the cathode terminals protruded from the battery cell and the penetration units so as to prevent short between the upper and lower electrodes in the unit cells stacked vertically. As shown in FIG. 6, the one side of the terminal unit insulating cover is slidingly inserted into the heat-dissipating member, and the terminal unit insulating cover and the heat-dissipating member may be fixed with a tape(50) to prevent movement of the inserted terminal unit insulating cover. Namely, when assembling the unit cells of the secondary battery module according to the present invention, the terminal unit insulating cover is attached to the heat-dissipating member in advance using the tape followed by combining the heat-dissipating member to the cell case in which the battery cell is settled

As another embodiment of the present invention, the unit cell of the present invention may further comprise a heat-dissipating auxiliary member to enhance the heat-dissipating efficiency.

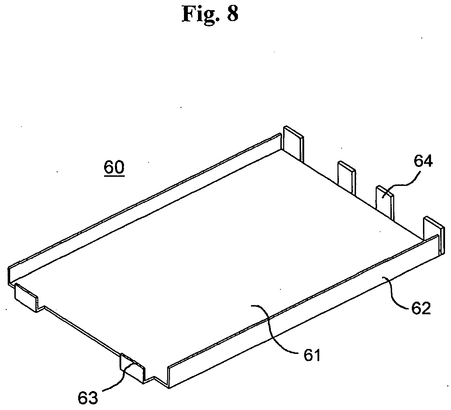

As shown in FIG. 8, the heat-dissipating auxiliary member(60) comprises: a heat-dissipating plate(61), right and left bending units(62) surrounding the right and left sides of the cell case(20) for integral combination with the cell case(20), upper bending units(63) surrounding the upper part where the electrode terminals are protruded, and lower bending units(64) surrounding the lower part opposite thereof. And because the cell case(20) comprises heat-dissipating member inserting units(24,25,28,29), which is penetrable from both up and down directions, at the position corresponding to the upper bending units and the lower bending units of the heat-dissipating auxiliary member, the cell case is integrally combined with the heat-dissipating auxiliary member across the heat-dissipating member inserting units. According to the present invention, the heat-dissipating member and the heat-dissipating auxiliary member may be included at the same time.

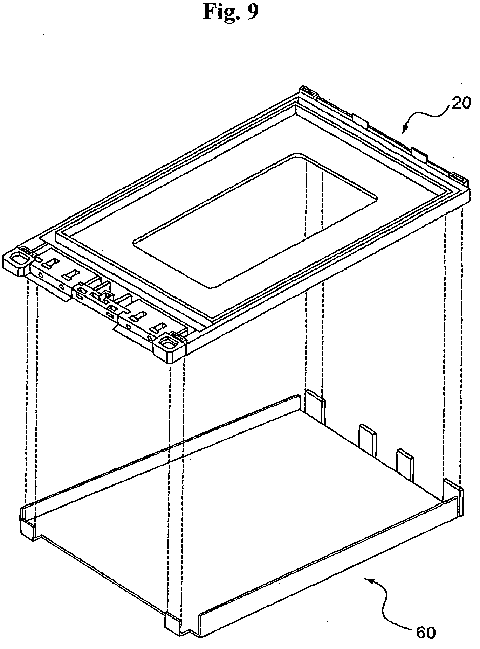

FIG. 9 shows the combination of the heat-dissipating auxiliary member and the cell case. As shown in FIG. 9, the heat-dissipating auxiliary member(60) is combined to make the right and left bending units(62) surround the upper, lower, right and left sides of the cell case(20), and the upper bending units(63) and the lower bending units(64) are combined with the heat-dissipating member inserting units(24,25,28,29) formed on the cell case(20) at the bottom of the cell case.

The installing position and number of the right and left bending units, the upper bending units and the lower bending units of the heat-dissipating auxiliary member are not limited, and the method for combining the bending units of the heat-dissipating auxiliary member and the cell case is not limited, but it is preferred to have a mechanical combination structure in order to reduce manufacturing cost and simplify an assembly procedure.

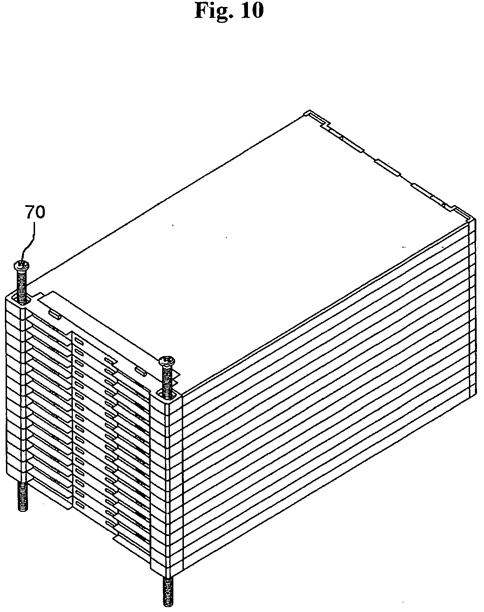

The required numbers of the assembled unit cells are stacked according to the size of the desired battery module, and a circuit case(not shown in FIGs) is combined to the top of the cell case(20). In the battery module according to the present invention, the front part of the cell case of is fixed with a fixing bolt(70) vertically penetrating the cell cases stacked as shown in FIG. 10 in order to strongly bind the several stacked unit cells and the circuit case without sway. The fixing bolt is vertically inserted in order through the combination hole formed vertically through the front part of the cell case and fixed with a nut.

The secondary battery module is completed by installing the circuit case on top of the stacked unit cells, and installing a circuit substrate and the like required to control the battery module on the circuit case followed by covering thereof with a cover.

While the invention has been described with respect to the above specific embodiments, it should be recognized that various modifications and changes may be made and also fall within the scope of the invention as defined by the claims that follow.

## Claims

1. A high output and large capacity secondary battery module, which can be charged or discharged by a plurality of unit cells electrically connected one another, wherein the unit cells comprise:
a chargeable or dischargeable battery cell (10);
a cell case receiving the battery cell (20);
a heat-dissipating member (30) covering the side which is opposite to the side facing the cell case; and
a terminal unit insulating cover (40) covering the terminal unit of the battery cell (10), wherein one side of the terminal unit insulating cover (40) is slidingly inserted into the heat-dissipating member (30).

2. The secondary battery module of claim 1, wherein electrodes (11, 12) are extruded outside of the battery cell (10) and bent tap terminals (13, 14) are welded to the extruded electrodes (11, 12), respectively.

3. The secondary battery module of claim 1, wherein the cell case (20) comprises:
a groove unit (21) in which the battery cell (20) is settled horizontally;
tap terminal inserting units (22, 23) to which the bending unit of the tap terminal attached to the battery cell is combined by insertion;
heat-dissipating member inserting units (24, 25, 28, 29) to which the upper bending units and the lower bending units of the heat-dissipating member (30) are combined by insertion; and
penetration units (26, 27) where a fixing bolt, which connects the plurality of unit cells stacked vertically, passes through.

4. The secondary battery module of claim 1, wherein the heat-dissipating member (30) comprises:
a heat-dissipating plate (31);
right and left bending units (32), which are extended from the heat-dissipating plate (31) and are bent to surround the right and left sides of the battery cell (10);
upper bending units (33) extended from the heat-dissipating plate (31) and surrounding the upper part of the battery cell (10); and
lower bending units (34) extended from the heat-dissipating plate (31) and surrounding the lower part of the battery cell (10), and
the heat-dissipating member (30) is combined with the cell case (20) across the battery cell (10) by inserting the right and left bending units (32) to the outside of the cell case (20) and inserting the upper bending units (33) and the lower bending units (34) into the heat-dissipating member inserting units (24, 25, 28, 29) formed on the cell case (20).

5. The secondary battery module of claim 4, wherein the right and left bending units (32) of the heat-dissipating member (30) further comprise flap units (35, 35').

6. The secondary battery module of claim 5, wherein the flap unit (35) is a form of a plurality of plates horizontally extended from the right and left bending units (32).

7. The secondary battery module of claim 5, wherein the flap unit (35') is a form of a plurality of plates vertically extended from the right and left bending units (32).

8. The secondary battery module of claim 1, wherein the unit cell further comprises a heat-dissipating auxiliary member (60) covering outer face of the cell case.

9. The secondary battery module of claim 8, wherein the heat-dissipating auxiliary member (60) comprises:
a heat-dissipating auxiliary member plate (61);
right and left bending units (62), which are extended from the heat-dissipating auxiliary member plate (60) and are bent to surround the right and left sides of the cell case (20);
upper bending units (63) extended from the heat-dissipating auxiliary member plate (61) and surrounding the upper part of the cell case (20); and
lower bending units (64) extended from the heat-dissipating auxiliary member plate (61) and surrounding the lower part of the cell case (20), and
the heat-dissipating auxiliary member (60) is integrally combined with the cell case (20) by inserting the right and left bending units (62) to the outside of the cell case (20) and inserting the upper bending units (63) and the lower bending units (64) into the heat-dissipating member inserting units (24, 25, 28, 29) formed on the cell case (20).

10. The secondary battery module of claim 1, wherein the heat-dissipating member (30) is made of a metal material, a carbon material or a ceramic material.

11. The secondary battery module of claim 1, wherein the heat-dissipating member (30) is made of an aluminum material.

12. The secondary battery module of claim 8, wherein the heat-dissipating auxiliary member (60) is made of a metal material, a carbon material or a ceramic material.

13. The secondary battery module of claim 8, wherein the heat-dissipating auxiliary member (60) is made of an aluminum material.

14. The secondary battery module of claim 1, which is equipped with the heat dissipating member (30), wherein an adhesive tape is attached to the part where the terminal unit insulating cover (40) is slidingly inserted into the heat-dissipating member (30).

15. The secondary battery module of claim 1, which comprises:
a circuit case equipped with a substrate measuring and managing voltage, current and temperature of the battery cell (10) received in the cell case (20); and
a sensing cable connecting the tap terminal of the battery cell (10) and the substrate of the circuit case and sensing the voltage and the temperature of the battery cell (10).

## Patentansprüche

1. Akkumodul mit hoher Leistung und großer Kapazität, das durch eine Vielzahl von Einheitszellen, die elektrisch miteinander verbunden sind, aufgeladen oder entladen werden kann, wobei die Einheitszellen umfassen:
eine aufladbare oder entladbare Batteriezelle (10);
ein Zellgehäuse (20), das die Batteriezelle aufnimmt;
ein Wärmeableitungselement (30), das die Seite, die der dem Zellgehäuse zugewandten Seite gegenüberliegt, bedeckt; und
eine die terminale Einheit isolierende Abdeckung (40), die die terminale Einheit der Batteriezelle (10) bedeckt, wobei eine Seite der die terminale Einheit isolierenden Abdeckung (40) gleitend in das Wärmeableitungselement (30) eingefügt ist.

2. Akkumodul gemäß Anspruch 1, wobei Elektroden (11, 12) außerhalb der Batteriezelle (10) extrudiert werden und gebogene Abzweigklemmen (13, 14) an die extrudierten Elektroden (11, 12) geschweißt sind.

3. Akkumodul gemäß Anspruch 1, wobei das Zellgehäuse (20) umfasst:
eine Rilleneinheit (21), in die die Batteriezelle (20) horizontal eingefügt ist;
Abzweigklemmen-Einsatzeinheiten (22, 23), mit denen die Biegeeinheit der an der Batteriezelle befestigten Abzweigklemme durch Einfügen kombiniert ist;
Wärmeableitungselement-Einsatzeinheiten (24, 25, 28, 29), mit denen die oberen Biegeeinheiten und die unteren Biegeeinheiten des Wärmeableitungselements (30) durch Einfügen kombiniert sind; und
Penetrationseinheiten (26, 27), durch die ein Haltebolzen, der die vertikal gestapelte Vielzahl von Einheitszellen miteinander verbindet, hindurchgesteckt ist.

4. Akkumodul gemäß Anspruch 1, wobei das Wärmeableitungselement (30) umfasst:
eine Wärmeableitungsplatte (31);
eine rechte und eine linke Biegeeinheit (32), die sich von der Wärmeableitungsplatte (31) aus erstrecken und so gebogen sind, dass sie die rechte und die linke Seite der Batteriezelle (10) umgeben;
obere Biegeeinheiten (33), die sich von der Wärmeableitungsplatte (31) aus erstrecken und den oberen Teil der Batteriezelle (10) umgeben; und
untere Biegeeinheiten (34), die sich von der Wärmeableitungsplatte (31) aus erstrecken und den unteren Teil der Batteriezelle (10) umgeben; und
wobei das Wärmeableitungselement (30) über die Batteriezelle (10) hinweg mit dem Zellgehäuse (20) kombiniert wird, indem man die rechte und die linke Biegeeinheit (32) auf die Außenseite des Zellgehäuses (20) einsetzt und die oberen Biegeeinheiten (33) und die unteren Biegeeinheiten (34) in die auf dem Zellgehäuse (20) gebildeten Wärmeableitungselement-Einsatzeinheiten (24, 25, 28, 29) einsetzt.

5. Akkumodul gemäß Anspruch 4, wobei die rechte und die linke Biegeeinheit (32) des Wärmeableitungselements (30) weiterhin Lascheneinheiten (35, 35') umfassen.

6. Akkumodul gemäß Anspruch 5, wobei die Lascheneinheit (35) in Form einer Vielzahl von Platten vorliegt, die sich horizontal von der rechten und der linken Biegeeinheit (32) aus erstrecken.

7. Akkumodul gemäß Anspruch 5, wobei die Lascheneinheit (35') in Form einer Vielzahl von Platten vorliegt, die sich vertikal von der rechten und der linken Biegeeinheit (32) aus erstrecken.

8. Akkumodul gemäß Anspruch 1, wobei die Einheitszelle weiterhin ein Wärmeableitungshilfselement (60) umfasst, das die Außenfläche des Zellgehäuses bedeckt.

9. Akkumodul gemäß Anspruch 8, wobei das Wärmeableitungshilfselement (60) umfasst:
eine Wärmeableitungshilfselementplatte (61);
eine rechte und eine linke Biegeeinheit (62), die sich von der Wärmeableitungshilfselementplatte (60) aus erstrecken und so gebogen sind, dass sie die rechte und die linke Seite des Zellgehäuses (20) umgeben;
obere Biegeeinheiten (63), die sich von der Wärmeableitungshilfselementplatte (61) aus erstrecken und den oberen Teil des Zellgehäuses (20) umgeben; und
untere Biegeeinheiten (64), die sich von der Wärmeableitungshilfselementplatte (61) aus erstrecken und den unteren Teil des Zellgehäuses (20) umgeben; und
wobei das Wärmeableitungshilfselement (60) einstückig mit dem Zellgehäuse (20) kombiniert wird, indem man die rechte und die linke Biegeeinheit (62) auf die Außenseite des Zellgehäuses (20) einsetzt und die oberen Biegeeinheiten (63) und die unteren Biegeeinheiten (64) in die auf dem Zellgehäuse (20) gebildeten Wärmeableitungselement-Einsatzeinheiten (24, 25, 28, 29) einsetzt.

10. Akkumodul gemäß Anspruch 1, wobei das Wärmeableitungselement (30) aus einem Metallmaterial, einem Kohlematerial oder einem Keramikmaterial besteht.

11. Akkumodul gemäß Anspruch 1, wobei das Wärmeableitungselement (30) aus einem Aluminiummaterial besteht.

12. Akkumodul gemäß Anspruch 8, wobei das Wärmeableitungshilfselement (60) aus einem Metallmaterial, einem Kohlematerial oder einem Keramikmaterial besteht.

13. Akkumodul gemäß Anspruch 8, wobei das Wärmeableitungshilfselement (60) aus einem Aluminiummaterial besteht.

14. Akkumodul gemäß Anspruch 1, das mit dem Wärmeableitungselement (30) ausgerüstet ist, wobei ein Klebeband an dem Teil befestigt ist, wo die die terminale Einheit isolierende Abdeckung (40) gleitend in das Wärmeableitungselement (30) eingefügt ist.

15. Akkumodul gemäß Anspruch 1, umfassend:
ein Schaltungsgehäuse, das mit einem Substrat ausgerüstet ist, das die Spannung, die Stromstärke und die Temperatur der im Zellgehäuse (20) aufgenommenen Batteriezelle (10) misst und steuert; und
ein Sensorkabel, das die Abzweigklemme der Batteriezelle (10) und das Substrat des Schaltungsgehäuses miteinander verbindet und die Spannung und die Temperatur der Batteriezelle (10) misst.

## Revendications

1. Module d'accumulateur à rendement élevé et de grande capacité, qui peut être chargé ou déchargé par une pluralité de cellules d'unité reliées électriquement entre eux, dans lequel les cellules d'unité comprennent :
une cellule de batterie chargeable ou déchargeable (10),
un boîtier de cellule (20) recevant la cellule de batterie,
un élément de dissipation de chaleur (30) couvrant le côté opposé au côté orienté vers le boîtier de cellule, et
une couverture isolante d'unité terminale (40) couvrant l'unité terminale de la cellule de batterie (10), dans lequel un côté de la couverture isolante d'unité terminale (40) est introduit par glissement dans l'élément de dissipation de chaleur (30).

2. Module d'accumulateur selon la revendication 1, dans lequel des électrodes (11, 12) sont extrudées en dehors de la cellule de batterie (10), et des bornes de branchement pliées (13, 14) sont soudées aux électrodes (11, 12) extrudées.

3. Module d'accumulateur selon la revendication 1, dans lequel le boîtier de cellule (20) comprend :
une unité de rainure (21) dans laquelle la cellule de batterie (20) est arrangée horizontalement,
des unités d'insertion de bornes de branchement (22, 23), auxquelles l'unité de pliage de la borne de branchement attachée à la cellule de batterie est combinée par insertion,
des unités d'insertion d'éléments de dissipation de chaleur (24, 25, 28, 29), auxquelles les unités de pliage supérieures et les unités de pliage inférieures de l'élément de dissipation de chaleur (30) sont combinées par insertion, et
des unités de pénétration (26, 27), où un boulon de fixation, qui relie la pluralité de cellules d'unité superposées verticalement, passe à travers.

4. Module d'accumulateur selon la revendication 1, dans lequel l'élément de dissipation de chaleur (30) comprend :
une plaque de dissipation de chaleur (31),
des unités de pliage droite et gauge (32), qui s'étendent à partir de la plaque de dissipation de chaleur (31) et sont pliées pour entourer les côtés droit et gauche de la cellule de batterie (10),
des unités de pliage supérieures (33), qui s'étendent à partir de la plaque de dissipation de chaleur (31) et entourent la partie supérieure de la cellule de batterie (10), et
des unités de pliage inférieures (34), qui s'étendent à partir de la plaque de dissipation de chaleur (31) et entourent la partie inférieure de la cellule de batterie (10), et
l'élément de dissipation de chaleur (30) est combiné avec le boîtier de cellule (20) à travers la cellule de batterie (10) par insertion des unités de pliage droite et gauge (32) à l'extérieur du boîtier de cellule (20) et insertion des unités de pliage supérieures (33) et des unités de pliage inférieures (34) dans les unités d'insertion d'éléments de dissipation de chaleur (24, 25, 28, 29) formés sur le boîtier de cellule (20).

5. Module d'accumulateur selon la revendication 4, dans lequel les unités de pliage droite et gauge (32) de l'élément de dissipation de chaleur (30) comprennent en outre des unités de volet (35, 35').

6. Module d'accumulateur selon la revendication 5, dans lequel l'unité de volet (35) se présente sous la forme d'une pluralité de plaques s'étendant horizontalement à partir des unités de pliage droite et gauge (32).

7. Module d'accumulateur selon la revendication 5, dans lequel l'unité de volet (35') se présente sous la forme d'une pluralité de plaques s'étendant verticalement à partir des unités de pliage droite et gauge (32).

8. Module d'accumulateur selon la revendication 1, dans lequel la cellule d'unité comprend en outre un élément auxiliaire de dissipation de chaleur (60) couvrant la face extérieure du boîtier de cellule.

9. Module d'accumulateur selon la revendication 8, dans lequel l'élément auxiliaire de dissipation de chaleur (60) comprend :
une plaque d'élément auxiliaire de dissipation de chaleur (61),
des unités de pliage droite et gauge (62), qui s'étendent à partir de la plaque d'élément auxiliaire de dissipation de chaleur (60) et sont pliées pour entourer les côtés droit et gauche du boîtier de cellule (20),
des unités de pliage supérieures (63) s'étendant à partir de la plaque d'élément auxiliaire de dissipation de chaleur (61) et entourant la partie supérieure du boîtier de cellule (20), et
des unités de pliage inférieures (64) s'étendant à partir de la plaque d'élément auxiliaire de dissipation de chaleur (61) et entourant la partie inférieure du boîtier de cellule (20), et
l'élément auxiliaire de dissipation de chaleur (60) est combiné intégralement avec le boîtier de cellule (20) par insertion des unités de pliage droite et gauge (62) à l'extérieur du boîtier de cellule (20) et insertion des unités de pliage supérieures (63) et des unités de pliage inférieures (64) dans les unités d'insertion d'éléments de dissipation de chaleur (24, 25, 28, 29) formés sur le boîtier de cellule (20).

10. Module d'accumulateur selon la revendication 1, dans lequel l'élément de dissipation de chaleur (30) est en un matériau métallique, un matériau de carbone ou un matériau céramique.

11. Module d'accumulateur selon la revendication 1, dans lequel l'élément de dissipation de chaleur (30) est en un matériau d'aluminium.

12. Module d'accumulateur selon la revendication 8, dans lequel l'élément auxiliaire de dissipation de chaleur (60) est en un matériau métallique, un matériau de carbone ou un matériau céramique.

13. Module d'accumulateur selon la revendication 8, dans lequel l'élément auxiliaire de dissipation de chaleur (60) est en un matériau métallique, un matériau de carbone ou un matériau d'aluminium.

14. Module d'accumulateur selon la revendication 1, qui est équipé de l'élément de dissipation de chaleur (30), dans lequel un ruban adhésif est attaché à la partie où la couverture isolante d'unité terminale (40) est introduit par glissement dans l'élément de dissipation de chaleur (30).

15. Module d'accumulateur selon la revendication 1, comprenant :
un boîtier de circuit équipé d'un substrat mesurant et gérant la tension, le courant et la température de la cellule de batterie (10) reçu dans le boîtier de cellule (20), et
un câble de détection reliant la borne de branchement de la cellule de batterie (10) et le substrat du boîtier de circuit et détectant la tension et la température de la cellule de batterie (10).
